# EUROPEAN PATENT SPECIFICATION

(11) **EP 3 543 263 B1**
(45) Date of publication and mention of the grant of the patent: **03.07.2024**
(21) Application number: 16921928.4
(22) Date of filing: 16.11.2016
(51) Int. Cl.: C08F 2/32, C08F 210/02, C08F 210/06, C08F 210/08, C08F 255/02, C08F 255/10, C08F 2/50

(54) **POLYOLEFIN-BASED EMULSIFIER AND APPLICATION THEREOF FOR PREPARING HIGH INTERNAL PHASE EMULSION AND POROUS POLYMERIC MATERIAL**
POLYOLEFINBASIERTER EMULGATOR UND ANWENDUNG DAVON ZUR HERSTELLUNG EINER EMULSION MIT HOHER INTERNER PHASE UND PORÖSES POLYMERMATERIAL
ÉMULSIFIANT À BASE DE POLYOLÉFINE ET SON APPLICATION POUR LA PRÉPARATION D'UNE ÉMULSION À PHASE INTERNE ÉLEVÉE ET D'UN MATÉRIAU POLYMÈRE POREUX

(43) Date of publication of application: 25.09.2019
(73) Proprietor: Zhejiang University, Xihu District Hangzhou Zhejiang 310058 (CN)
(72) Inventor: WANG, Wenjun, Hangzhou Zhejiang 310058 (CN); WANG, Song, Hangzhou Zhejiang 310058 (CN); LI, Bogeng, Hangzhou Zhejiang 310058 (CN)
(74) Representative: Kolster Oy Ab
(86) International application number: PCT/CN2016/106051
(87) International publication number: WO 2018/090229

(56) References cited:
- WO-A2-2012/134725
- CN-A- 102 206 307
- CN-A- 105 968 027
- US-A- 5 866 663
- VLADIMIR A. KRYUCHKOV ET AL: "Amphiphilic Polyethylenes Leading to Surfactant-Free Thermoresponsive Nanoparticles", JOURNAL OF THE AMERICAN CHEMICAL SOCIETY, vol. 132, no. 44, 10 November 2010 (2010-11-10), pages 15573-15579, XP055217277, ISSN: 0002-7863, DOI: 10.1021/ja104182w
- SHENGMIAO ZHANG ET AL: "Stability of surfactant-free high internal phase emulsions and its tailoring morphology of porous polymers based on the emulsions", POLYMER, ELSEVIER SCIENCE PUBLISHERS B.V, GB, vol. 52, no. 21, 17 August 2011 (2011-08-17), pages 4881-4890, XP028389784, ISSN: 0032-3861, DOI: 10.1016/J.POLYMER.2011.08.022 [retrieved on 2011-08-22]
- SONG WANG ET AL: "Toward Maximizing the Mechanical Property of Interconnected Macroporous Polystyrenes Made from High Internal Phase Emulsions", LANGMUIR, vol. 33, no. 50, 5 December 2017 (2017-12-05), pages 14295-14303, XP055632291, US ISSN: 0743-7463, DOI: 10.1021/acs.langmuir.7b03176

## Description

### Technical field

The present invention relates to use of a topological polyolefin-based copolymer as an emulsifier in preparation of a stable water-in-oil high internal phase emulsion.

The present invention further relates to a stable water-in-oil high internal phase emulsion comprising a polyolefin-based copolymer as emulsifier.

The present invention still further relates to processes for preparing a stable water-in-oil high internal phase emulsion.

The present invention also relates to a porous polymer material obtained by polymerization of a stable water-in-oil high internal phase emulsion, in particular a high strength, through-hole porous polymer material prepared from the stable water-in-oil high internal phase emulsion and its use in catalysis, separation, energy accumulation, insulation, barrier, absorption and other fields.

### Background art

The use of high internal phase emulsions (HIPE) in preparation of porous polymer materials is well known, and has advantages of simple preparation process, easy forming and easy post-modification. The resulting porous polymer materials are widely used in catalysis, separation, energy accumulation, insulation, barrier, absorption and other fields.

In the preparation of conventional high internal phase emulsions, a large amount (>20%) of small molecule surfactants are used as emulsifiers to stabilize emulsions, therefore, a significant amount of surfactants are remained in the resulting product materials, which greatly reduces the strength of the materials, thereby restricting the use of porous polymer materials. U.S. Patent No. 2001/0029271 A1 discloses the use of alkenyl succinic acid derivatives as emulsifiers for high internal phase emulsions, which emulsifiers participate in polymerization reactions to obtain porous polymer materials, however, it is still necessary to use a large amount of emulsifiers. Chinese patent CN103539929A discloses that copolymer microspheres are used to stabilize water-in-oil high internal phase emulsions, and porous polymer materials are prepared by a diene cross-linking reaction in the emulsions. U.S. Patent No. 2010/0261803 A1 discloses that modified metal oxides and silica microspheres are used to stabilize water-in-oil high internal phase emulsions, and porous polymer materials are prepared by polymerization. Although the use of the microspheres can stabilize high internal phase emulsions, the resulting porous polymer materials have a large pore size and are not of through-hole, and thereby cannot satisfy the use requirements of porous polymer materials. U.S. Patent No. 2013/0287735 A1 discloses that ester-based macromolecular emulsifiers are used to stabilize water-in-oil high internal phase emulsions, and porous polymer materials having good biocompatibility are prepared, however, it is still necessary to use a large amount of emulsifiers in the preparation. Patent US 5866663A discloses a process for the polymerization of olefins using a specific translation metal complex of a bidentate ligand, and Example 99 of D5 discloses the copolymerization of ethylene and methyl acrylate. Journal of the American Chemical Society, vol. 132, no. 44, pages 15573-15579, discloses a linear copolymers of ethylene and acrylic acid prepared by catalytic polymerization of ethylene and tert-butyl acrylate followed by hydrolysis of the ester groups. Polymer, vol. 52, no. 21, pages 4881-4890, discloses the preparation of stable water-in-oil high internal phase emulsions having an internal phase of up to 95 vol%, wherein poly(styrene-methyl methacrylate-acrylic acid) copolymer particles were used as stabilizer.

### Summary of the invention

The present invention concerns a use of a topological polyolefin-based copolymer as an emulsifier in the preparation of a stable water-in-oil high internal phase emulsion, and a high strength, through-hole porous polymer material is prepared by polymerization of a water-in-oil high internal phase emulsion stabilized by the polyolefin-based copolymer.

In view of the deficiencies of the prior art and the demands in the art, the present invention, as defined in independent claim 1, provides a use of a topological polyolefin-based copolymer as emulsifier in the preparation of a stable water-in-oil high internal phase emulsion, wherein the copolymer is obtained by copolymerizing one or more C₂-C₁₂ olefins and one or more functional monomers optionally in the presence of a catalyst, and optionally subjecting to a post-reaction, wherein the copolymer has a number average molecular weight of 300-1,000,000 g/mol, and a molecular weight distribution of 1-20; the functional monomers are selected from the group consisting of (meth)acrylates and derivatives thereof, (meth)acrylamides and derivatives thereof, and undecenoates and derivatives thereof; and the ratio of the olefins and the functional monomers is 10-5000:1.

In a preferred embodiment of the use according to the invention, the one or more C₂-C₁₂ olefins are C₂-C₄ olefins. In the use of the invention, it is further preferred that the copolymer has a number average molecular weight of 500-500,000 g/mol. In said use it is still further preferred that the molecular weight distribution is 1-10. Preferably, the ratio of the olefins and the functional monomers is 30-1000:1, more preferably 50-500:1.

Specifically claimed preferred embodiments of the use according to the invention are as defined in dependent claims 2-6.

Further disclosed, but not part of the invention, is a process for preparing a polyolefin-based emulsifier comprising the steps of:
copolymerizing a C₂-C₁₂ olefin, preferably a C₂-C₄ olefin and a functional monomer in a dry organic solvent optionally in the presence of a catalyst to obtain a copolymer, wherein the copolymer has a number average molecular weight of 300-1,000,000 g/mol, preferably 500-500,000 g/mol, and a molecular weight distribution of 1-20, preferably 1-10; the functional monomer is selected from the group consisting of (meth)acrylates and derivatives thereof, (meth)acrylamides and derivatives thereof, and undecenoates and derivatives thereof; and the ratio of olefins and functional monomers is 10-5000:1, preferably 30-1000:1, more preferably 50-500:1;
upon the completion of the copolymerization, adding a reaction terminator to obtain a topological polyolefin-based emulsifier product containing a hydrophilic group;
drying in vacuum oven to remove residual organic solvents and reaction terminator in the product; and
optionally carrying out a post-reaction so that the product contains further hydrophilic nonionic groups or ionic groups.

The polyolefin-based copolymer as emulsifier in the use of the present invention may be a nonionic polyolefin-based copolymeror an ionic polyolefin-based copolymer.

The conditions for the copolymerization reaction are known in the art, for example, the temperature of the polymerization reaction is usually -80-260°C, preferably -40-200°C, more preferably -20-150°C; the absolute pressure in the polymerization system is 0.05-100atm, preferably 0.08-50atm, more preferably 0.1-30atm; the reaction time is usually 0.1-100 hours, preferably 0.3-80 hours, more preferably 0.5-50 hours.

The type of the copolymerization reaction may include free radical polymerization or coordination polymerization. Techniques for free radical polymerization are known in the art, such as low-density polyethylene production techniques. In general, free radical polymerization can be carried out at 170-260°C, and it is not necessary to use a catalyst, but a small amount of a catalyst for free radical polymerization known in the art may be added, such as 1,1-di-(tert-butylperoxy)-3,3,5-trimethylcyclohexane and other peroxide initiators. Techniques for coordination polymerization are known in the art, for example, transition metal catalysis, late transition metal catalysis, metallocene catalysis, Z-N catalysis. Among them, late transition metal catalysis is preferred, and late transition metal catalysts used in the late transition metal catalysis technique are known in the art, for example, see Ittel, S. D. et al., M., Late-metal catalysts for ethylene homo- and co-polymerization. Chemical Review 2000, 100, 1169-1203. Palladium-diimine catalysts are preferably used in the present invention, including, but not limited to [(ArN=C(Me)-(Me)C=NAr)Pd(CH₃)(N≡CMe)]⁺SbF₆⁻ (Ar=2,6-(iPr)2C₆H₃ or 2,6-(Me)₂C₆H₃), [(ArN=C(Me)-(Me)C=NAr)Pd(CH₃)(OEt₂)]⁺SbF₆-, [(ArN=C(Me)-(Me)C=NAr)Pd(CH₂)₃C(O)OCH₃]⁺SbF₆⁻, [(ArN=C(Me)-(Me)C=NAr)Pd(CH₂)₃C(O)O(CH₂)₂OC(O)C(CH₃)₂Br]⁺SbF₆⁻, [(ArN=C(Me)-(Me)C=NAr)Pd(CH₃)(N≡CMe)]⁺B(Ar')₄⁻, [(ArN=C(Me)- (Me)C=NAr)Pd-(CH₃)(OEt₂)]⁺B(Ar')₄⁻, [(ArN=C(Me)-(Me)C=NAr)Pd(CH₂)₃C(O)OCH₃]⁺B(Ar')₄⁻, [(ArN=C(Me)-(Me)C=NAr)Pd(CH₂)₃C(O)O(CH₂)₂OC(O)C(CH₃)₂Br]⁺B(Ar')₄⁻, [(ArN=CH-HC=NAr)Pd(CH₃)(N≡CMe)]⁺SbF₆⁻, [(ArN=CH-HC=NAr)Pd(CH₃)(OEt₂)]⁺SbF₆⁻, [(ArN=CH-HC=NAr)Pd(CH₂)₃C(O)OCH₃]⁺SbF₆⁻, [(ArN=CH-HC=NAr)Pd(CH₂)₃C(O)O(CH₂)₂OC(O)C(CH₃)₂Br]⁺SbF₆⁻,
[(ArN=CH-HC=NAr)Pd(CH₃)(N≡CMe)]⁺B(Ar')₄⁻, [(ArN=CH-HC=NAr)Pd(CH₃)(OEt₂)]⁺B(Ar')₄⁻, [(ArN=CH-HC=NAr)Pd(CH₂)₃C(O)OCH₃]⁺B(Ar')₄⁻ and [(ArN=CH-HC=NAr)Pd(CH₂)₃C(O)O(CH₂)₂OC(O)C(CH₃)₂Br]⁺B(Ar')₄⁻, [(ArN=An=NAr)Pd(CH₃)(N≡CMe)]⁺SbF₆⁻ (Ar= 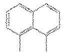 ), [(ArN=An=NAr)Pd(CH₃)(OEt₂)]⁺SbF₆⁻, [(ArN=An=NAr)Pd(CH₂)₃C(O)OCH₃]⁺SbF₆⁻, [(ArN=An=NAr)Pd(CH₂)₃C(O)O(CH₂)₂OC(O)C(CH₃)₂Br]⁺SbF₆⁻, [(ArN=An=NAr)Pd(CH₃)(N≡CMe)]⁺B(Ar')₄⁻, [(ArN=An=NAr)Pd-(CH₃)(OEt₂)]⁺B(Ar')₄⁻, [(ArN=An=NAr)Pd(CH₂)₃C(O)OCH₃]⁺B(Ar')₄⁻, [(ArN=An=NAr)Pd(CH₂)₃C(O)O (CH₂)₂OC(O)C(CH₃)₂Br]⁺B(Ar')₄- etc. The synthesis of above catalysts is known in the art, for example, see Brookhart, M. et al., "New Pd(II)- and Ni(II)-Based Catalysts for Polymerization of Ethylene and .alpha.-Olefins", Journal of the American Chemical Society 1995, 117 (23), 6414-6415", and Ye ZB, et al., "Synthesis of block copolymers of ethylene with styrene and n-butyl acrylate via a tandem strategy combining ethylene "Living" polymerization catalyzed by a functionalized Pd-diimine catalyst with atom transfer radical polymerization.", Macromolecules 2008, 41(3), 640-649".

If a catalyst is employed, the concentration of the catalyst is usually 0.00001-5 mol/l, preferably 0.0005-1 mol/l, more preferably 0.001-0.2 mol/l.

Examples of the C₂-C₁₂ olefins include, but are not limited to, ethylene, propylene, 1-butene, 1-pentene, 1-hexene, 1-octene, 1-dodecene, 4-methyl-1-pentene and any mixtures thereof. In the present invention, examples of preferred C₂-C₄ olefins include ethylene, propylene, 1-butene, and any mixtures thereof. Each of above olefins is commercially available.

The functional monomers include, but are not limited to, (meth)acry-lates and derivatives thereof, for example, methyl acrylate, ethyl acrylate, n-butyl acrylate, isobutyl acrylate, tert-butyl acrylate, glycidyl acrylate, ethyl 2-(methoxy)acrylate, ethyl 2-(benzyloxy)acrylate, ethyl 2-(trimethylsiloxy)acrylate, ethyl 4-(trimethylsiloxy)acrylate, ethyl 2-(triethylsiloxy)acrylate, ethyl 2-(tert-butyl-dimethylsiloxy)acrylate, ethyl 2-(tert-butyldiphenylsiloxy)acrylate, ethyl 2-(dime-thylamino)acrylate, ethyl 2-(ethylamino)acrylate, ethyl 2-(2-bromoisobu-toxy)acrylate, 2-(acryloyloxyethoxy)trimethylsilane, acryloyloxyethyltrimethylammonium chloride; (meth)acrylamides and derivatives thereof, for example, N,N-dimethylacrylamide, isopropylacrylamide, N,N-dipropylacrylamide; undecenoates and derivatives thereof, for example, ethyl 2-(trimethylsiloxy) undecenoate, methyl undecenoate, tert-butyl undecenoate; and any mixtures thereof.

In the present invention, preferred functional monomers include glycidyl acrylate, ethyl 2-(trimethylsiloxy)acrylate, ethyl 4-(trimethylsiloxy)acrylate, ethyl 2-(triethylsiloxy)acrylate, ethyl 2-(tert-butyldimethylsiloxy)acrylate, ethyl 2-(2-bromoisobutoxy)acrylate, tert-butyl undecenoate, N,N-dimethylacrylamide, and any mixtures thereof.

The above (meth)acrylates and derivatives thereof, (meth)acrylamides and derivatives thereof, and undecenoates and derivatives thereof as functional monomers are known in the art, and can be prepared by processes known in the art. For example, (meth)acrylates and derivatives thereof can be prepared by reacting corresponding hydroxy-containing compounds with acryloyl chloride, see, for example, Wang WJ et al., "Hyperbranched Polyethylenes Encapsulating Self-Supported Palladium (II) Species as Efficient and Recyclable Catalysts for Heck Reaction", Macromolecules, 2013, 46(1), 72-82. For another example, (meth)acrylamides and derivatives thereof can be prepared by amidation of corresponding amido-containing compounds with corresponding protective groups, see, for example, Wang WJ et al., "Hyperbranched polyethylene-supported L." -proline: a highly selective and recyclable organocatalyst for asymmetric aldol reactions", Catalyst Science Technology, 2015, 5, 3798-3805. Further, for example, the above undecenoates and derivatives thereof can be prepared by reacting corresponding hydroxy-containing compounds with un-decylenoyl chloride, see, for example, Angels Serra et al., "Efficient iMPact resistance improvement of epoxy/anhydride". Thermosets by adding hyperbranched polyesters partially modified with undecenoyl chains", Polymer, 2012, 53, 5232-5241.

The organic solvents are known in the art, including, but not limited to, alkanes, such as hexane, cyclohexane, heptane, toluene, xylene, etc.; halogenated hydrocarbons, such as dichloromethane, chlorobenzene, dichlorobenzene, chloroform; ketones, such as acetone, methyl ethyl ketone, cyclohexanone, etc.; amides, such as dimethylformamide, dimethylacetamide, etc.; and other common organic solvents, such as tetrahydrofuran.

The reaction terminators are known in the art, and the reaction terminators also serve as precipitants for separation of polymers during the preparation. Examples include, but are not limited to, alcohols, such as methanol, ethanol, isopropanol and a mixture thereof, preferably methanol, ethanol and a mixture thereof. It is also possible to mix a small amount of water in the above alcohols and the mixtures thereof.

The volume ratio of the reaction terminators to the organic solvents in the above preparation process is 1-100:1, preferably 3-20:1.

In the above preparation process, the temperature for drying in vacuum is usually 10-100°C, preferably 20-80°C. The drying time is usually 1-72 hours, preferably 12-48 hours.

The optional post-reactions include, but are not limited to, hydroxy deprotection reaction, amino deprotection reaction, carboxyl deprotection reaction, epoxide ring-opening reaction, esterification reaction, reversible addition-fragmentation chain transfer (RAFT) polymerization reaction, atom transfer radical polymerization (ATRP) reaction, and nitroxide-mediated radical polymerization (NMP) and the like. The purpose of optionally including these post-reactions is to introduce additional hydrophilic nonionic groups and/or ionic groups into the polyolefin-based emulsifier, and, if desired, suitable post-reactions can be selected to achieve desired nonionic polyolefin-based emulsifiers or ionic polyolefin-based emulsifiers, which is known to those skilled in the art.

Each of the above post-reactions is known in the art. For example, the hydroxy deprotection reaction can be carried out by reacting a corresponding polymer with a deprotecting agent, see, for example, Wu Q et al., "Synthesis of Hyperbranched Polyethylene Amphiphiles by Chain Walking Polymerization in Tandem with RAFT Polymerization and Supramolecular Self-Assembly Vesicles", Macromolecular Rapid Communication 2012, 33, 374-379. The amino deprotection reaction can be carried out by reacting a corresponding polymer with a deprotecting agent, see, for example, Wang WJ et al., "Hyperbranched polyethylene-supported L-proline: a highly selective and recyclable organocatalyst for asymmetric aldol reactions", Catalyst Science Technology, 2015, 5, 3798-3805. The carboxyl deprotection reaction can be carried out by reacting a corresponding polymer with a deprotecting agent, see, for example, Wang WJ et al., "Hyperbranched polyethylene-supported L-proline: a highly selective and recyclable organocatalyst for asymmetric aldol reactions", Catalyst Science Technology, 2015, 5, 3798-3805. The epoxide ring-opening reaction can be carried out by reacting a corresponding polymer with a substance containing an amino group, a carboxyl group or the like, see, for example, "Highly Specific Enrichment of Glycopeptides Using Boronic Acid-Functionalized Mesoporous Silica" by Zhao DY et al., Analytical Chemistry, 2009, 81, 503-508. The esterification reaction can be carried out by reacting a corresponding polymer with a substance containing a carboxyl group, a hydroxyl group or the like, See, for example, Wu Q et al., "Synthesis of Hyperbranched Polyethylene Amphiphiles by Chain Walking Polymerization in Tandem with RAFT Polymerization and Supramolecular Self-Assembly Vesicles", Macromolecular Rapid Communication 2012, 33, 374-379. The reversible addition-fragmentation chain transfer (RAFT) polymerization reaction can be carried out by controlling the polymerization of hydrophilic group-containing monomers with corresponding polyolefin macromolecules, see, for example, Wu Q et al., "Synthesis of Hyperbranched Polyethylene Amphiphiles by Chain Walking Polymerization in Tandem with RAFT Polymerization and Supramolecular Self-Assembly Vesicles", Macromolecular Rapid Communication 2012, 33, 374-379. The atom transfer radical polymerization (ATRP) reaction can be carried out by initiating the polymerization of hydrophilic group-containing monomers with corresponding polyolefin macroinitiators, see, for example, Wang WJ et al., "One-step synthesis of hyperbranched polyethylene macroinitiator and its Block copolymers with methyl methacrylate or styrene via ATRP", Journal of Polymer Science: Part A: Polymer Chemistry, 2010, 48, 3024-3032. The nitroxide-mediated radical polymerization (NMP) can be carried out by controlling the polymerization of hydrophilic group-containing monomers with corresponding polymers, see, for example, "Dendritic amphiphile mediated porous monolith for eliminating organic micropollutants from Wan DC et al." Water", Journal of Material Chemistry A, 2015, 3, 6297-6300.

The topological polyolefin-based copolymer as emulsifier of the present invention may be a linear, branched, hyperbranched, dendritic, and star topology. As the polymer structure changes from linear to star, the hydrodynamic volume of polymers of the same molecular weight gradually decreases. The specific topology of polyolefin-based copolymers as emulsifiers can be controlled according to the use desired by those skilled in the art, which can be achieved by controlling polymerization processes and reaction conditions, such as temperature, pressure, monomers feeding process, catalyst type, etc., which are known in the art.

As defined in independent claim 7, the invention further provides a stable water-in-oil high internal phase emulsion comprising the above topological polyolefin-based copolymer as emulsifier described in any one of claims 1-6.

In particular, the stable water-in-oil high internal phase emulsion preferably comprises an aqueous phase having a volume fraction of at least 67%, more preferably 74%, even more preferably 80%; an oil phase having a volume fraction of at most 33%, more preferably 26%, still more preferably 20%; and the polyolefin-based emulsifier in an amount of 0.0001-0.2 g/ml, more preferably 0.002-0.15 g/ml based on the total volume of the aqueous phase and the oil phase, wherein the polyolefin-based emulsifier is generally included in the oil phase of the high internal phase emulsion.

Specifically claimed preferred embodiments of the stable water-in-oil high internal phase emulsion according to the invention are those defined in dependent claims 8 and 9.

In accordance with independent claim 10, the invention also further provides a process for preparing a stable water-in-oil high internal phase emulsion according to any one of claims 7-9, comprising the steps of:
(1) preparation of an oil phase: mixing the polyolefin-based copolymer as emulsifier described in any one of claims 1-6 and an optional known emulsifier in any ratio and dispersing into an oil phase, wherein the total concentration of the polyolefin-based emulsifier and optional known emulsifier is 0.0001-1 g/ml;
(2) preparation of an aqueous phase: dissolving a salt and a water-soluble initiator in water, wherein the concentration of the salt is 0-0.1 g/ml, and the concentration of the initiator is 0.0001-0.05 g/ml; and
(3) preparation of a stable water-in-oil high internal phase emulsion: adding the aqueous phase prepared in the step (2) to the oil phase prepared in the step (1) with stirring of 100-20000 rpm to obtain a stable water-in-oil high internal phase emulsion, wherein the volume ratio of the oil phase to the aqueous phase is 1:1-15.

In the above process according to the invention, it is preferable that in step (1) the total concentration of the polyolefin-based emulsifier and optional known emulsifier is 0.001-0.5 g/ml; that in step (2) the concentration of the salt is 0.0005-0.05 g/ml and the concentration of the initiator is 0.002-0.02 g/mol; that in step (3) stirring occurs at 500-15000 rpm and the volume ratio of the oil phase to the aqueous phase is 1 :2-12.

A specifically claimed preferred embodiment of the process of independent claim 10 is defined in dependent claim 11.

The stirring in the preparation process may be magnetic stirring, mechanical stirring, high-speed shear and the like, preferably high-speed shear.

The water-soluble initiator in the preparation process may be a water-soluble thermal initiator and a water-soluble photo-initiator, which are known in the art. For example, the water-soluble thermal initiator includes, but is not limited to, potassium persulfate, ammonium persulfate, 2,2'-azobis(2-methylpropi-onamidine) dihydrochloride, 1,2-bis(2-(4,5-dihydro-1H-imidazol-2-yl)propan-2-yl)diazene dihydrochloride, 4,4'-azobis(4-cyanopentanoic acid), 2,2'-azobis[2-(2-imidazolin-2-yl)propane, and the like. The water-soluble photo-initiator includes, but is not limited to, aromatic ketones, fused ring aromatic hydrocarbons, polysilanes, acyl phosphates, azos, organometallic complexes, and the like. Each of the above water-soluble initiator materials is commercially available.

The materials constituting the oil phase are known in the art, and generally include vinyl monomers including, but not limited to, styrenes, such as styrene, divinylbenzene, 4-ethylstyrene, 4-methylstyrene; (meth)acrylates, such as methyl acrylate, methyl methacrylate, n-butyl acrylate, n-butyl (meth)acrylate, tert-butyl acrylate, tert-butyl (meth)acrylate, 2-ethylhexyl acrylate, 2-ethylhexyl (meth)acrylate, ethylene glycol dimethacrylate, 1,4-butylene glycol dimethacrylate; other ethylene monomers, such as acrylonitrile, vinyl acetate, and any mixtures thereof. Each of the above oil phase materials is commercially available.

The salts in the above preparation processes are known in the art. For example, the salts include, but are not limited to, sodium chloride, calcium chloride, potassium chloride, magnesium chloride, ammonium chloride, ferric chloride, sodium carbonate, potassium carbonate, sodium bicarbonate, potassium bicarbonate, sodium sulfate, potassium sulfate, ammonium sulfate, magnesium sulfate, sodium nitrate, potassium nitrate and the like, and any mixtures thereof. Each of the above salts is commercially available.

The known emulsifiers in the above preparation processes are those known in the art. For example, the known emulsifiers include, but are not limited to, anionic surfactants, cationic surfactants, nonionic surfactants, macromolecular surfactants, and/or Pickering emulsifiers. The nonionic surfactants may be, for example, Span-80, Span-85, Span-60, Span-65; the cationic surfactants may be, for example, cetyltrimethylammonium bromide; the anionic surfactants may be, for example, sodium dodecyl sulfonate; the macromolecular surfactants may be, for example, A70; the Pickering emulsifiers may be, for example, silica nanoparticles, titania nanoparticles.

The invention still further provides another process, as defined in independent claim 12, for preparing a stable water-in-oil high internal phase emulsion according to any one of claims 7-9, comprising the steps of:
(1) preparation of an oil phase: dispersing the polyolefin-based copolymer as emulsifier described in any one of claims 1-6, a known emulsifier and an oil-soluble initiator mixed in any ratio into an oil phase, wherein the total concentration of the polyolefin-based emulsifier and a known emulsifier is 0.0001-1 g/ml, and the concentration of the oil-soluble initiator is 0.0001-0.05 g/ml;
(2) preparation of an aqueous phase: dissolving a salt in water, wherein the concentration of salt is 0-0.1 g/ml; and
(3) preparation of a stable water-in-oil high internal phase emulsion: adding the aqueous phase prepared in the step (2) to the oil phase prepared in the step (1) with stirring of 100-20000 rpm to obtain a stable water-in-oil high internal phase emulsion, wherein the volume ratio of the oil phase to the aqueous phase is 1:1-15.

In the above process according to independent claim 12, it is preferable that in step (1) the total concentration of the polyolefin-based emulsifier and known emulsifier is 0.001-0.5 g/ml; that in step (2) the concentration of the salt is 0.0005-0.05 g/ml; that in step (3) stirring occurs at 500-15000 rpm and the volume ratio of the oil phase to the aqueous phase is 1:2-12.

A specifically claimed preferred embodiment of the process of independent claim 12 is defined in dependent claim 13.

The oil-soluble initiator in the above preparation process may be an oil-soluble thermal initiator and an oil-soluble photo-initiator, which are known in the art. The oil-soluble thermal initiator includes, but is not limited to, dibenzoyl peroxide, azobisisobutyronitrile, lauramido peroxide, N,N-dibutylaniline, 2,2'-azobis(2,4-dimethyl)valeronitrile, 1,1'-azobis(cyclohexane-1-carbonitrile, and the like. The oil-soluble photo-initiator includes, but is not limited to, 2-hydroxy-methylphenylpropan-1-one, 1-hydroxycyclohexyl phenyl ketone, 2-methyl-1-(4-methylthiophenyl)-2-morpholinyl-1-propanone, benzoin dimethyl ether, 2,4,6-trimethylbenzoyldiphenylphosphine oxide, isopropylthioxanthone, ethyl 4-dimethylaminobenzoate, benzophenone, and the like. Each of the above oil-soluble initiators is commercially available.

The oil phase, the known emulsifier, the salt and the stirring method employed in the above preparation process are the same as those described in the previous preparation processes.

Fillers can be used in the high internal phase emulsions, and the fillers are known in the art. For example, the fillers include, but are not limited to, titania, silica, calcium carbonate, bentonite, cellulose, chitosan, sodium alginate, graphene, carbon nanotubes, graphite, activated carbon and the like, and any mixtures thereof. Each of the above fillers is commercially available.

The water-in-oil high internal phase emulsion of the present invention is characterized by high emulsion stability, and no significant change being observed after 6 months storage at room temperature. The emulsion has a particle size of 0.05-1000 µm, preferably 0.1-100 µm.

In accordance with independent claim 14, the invention still further provides a porous polymer material obtained by polymerization of a stable water-in-oil high internal phase emulsion according to any one of claims 7-9 or prepared by the process according to any one of claims 10-13.

Disclosed is a process for preparing the above porous polymer material, comprising the steps of: polymerizing the stable water-in-oil high internal phase emulsion as described above to obtain a polymerization product; removing water from the polymerization product in a vacuum drying oven to obtain a porous polymer material.

The conditions for the polymerization reaction in the above preparation processes are known, for example, the polymerization temperature is usually 20-100°C, preferably 40-80°C; the polymerization time is usually 0.1-50 hours, preferably 3-24 hours; and the vacuum drying temperature is usually 20-150°C, preferably 60-90°C.

The porous polymer materials of the present invention are preferably characterized in that the porous polymers are of a through-hole; the average pore diameter is 0.05-1000 µm, preferably 0.1-200 µm; the compression modulus is 1-600 MPa, preferably 5-500 MPa; the porosity is 60-93%; and the density is 0.07-0.70 g/cm³.

The porous polymer materials of the present invention can be used in various fields, including catalysis, separation, energy accumulation, insulation, barrier, absorption and other fields. Among them, when used in separation field, particles with a particle size larger than 600 nm can be selectively separated, with a separation efficiency up to 99%; when used in catalysis field, gold nanoparticles can be supported as catalysts for catalyzing the oxidation of diphenylethylsilane to diphenylethylsilanol, with a conversion of 100%, and they can be used for one week.

### Examples

### Example 1

(1) Synthesis of topological polyolefin-based emulsifier with a terminal epoxy group
   [(ArN=C(Me)-(Me)C=NAr)Pd(CH₃)(N≡CMe)]⁺SbF₆⁻(Ar=2,6-(iPr)₂C₆H₃) (1600 mg, 2 mmol) and glycidyl acrylate (Sigma-Aldrich, 3.42 g, 0.03 mol) were dissolved in 10 ml of anhydrous dichloromethane (Sinopharm) under nitrogen protection; the resulting solution was poured into a Schlenck flask filled with ethylene (Sinopec), the flask was placed in a water bath at 5°C, the absolute pressure of the system was maintained at 30atm, and the polymerization reaction was carried out for 1 hour; upon the completion of the reaction, 200 ml of methanol was added to terminate the reaction, and the polymer was precipitated, dried in a vacuum oven at 80°C to obtain a topological polyolefin-based emulsifier with a terminal epoxy group (¹H NMR and GPC results showed that the number average molecular weight was 9700, the molecular weight distribution was 1.05, the degree of branching was 90/1000 C, and each polyolefin molecule contained 19.4 epoxy groups).
(2) Preparation of high internal phase emulsions
   0.002 g of the polyolefin-based emulsifier synthesized in the step (1), 0.8 ml of styrene, and 0.2 ml of divinylbenzene (Alfa Aesar) were added to a 10 ml bacteria flask, and the polyolefin-based emulsifier was dispersed to obtain an oil phase. Calcium chloride (2 mg, Sinopharm) and potassium persulfate (8 mg, Sinopharm) were dissolved in 4 ml of distilled water, and then added to a 10 ml bacterial flask to obtain an aqueous phase. The aqueous phase obtained above was added dropwise to the oil phase obtained above with 1000 rpm shear rate to obtain a stable water-in-oil high internal phase emulsion.
(3) Preparation of porous polymer materials
   The stable water-in-oil high internal phase emulsion obtained in the step (2) was filled into a steel tube, heated to 50°C in an oil bath, and reacted for 24 hours; upon the completion of the reaction, the resultant was dried in a vacuum oven at 60°C to remove water so as to obtain a porous polymer material filled in a steel tube. The resulting porous polymer material had a compression Young's modulus of 130 MPa, a porosity of 79%, a density of 0.22 g/cm³, and an average pore diameter of 94 µm.
(4) Preparation of supported catalyst
   A 20 mg/ml chloroauric acid hydrate/acetone solution (volume ratio of 1:1) was introduced into the steel tube filled with the porous polymer material obtained in the step (3) for 1 hour, and the flow rate was controlled at 0.5 ml/min. Then 10 mg/ml of an aqueous sodium borohydride solution was introduced into the steel tube to reduce chloroauric acid hydrate, and the flow rate was controlled at 0.5 ml/min for 30 min to obtain a gold nanoparticles-supported catalyst.
(5) Use of gold nanoparticles-supported catalyst in silane oxidation
   A solution of 0.1 g/ml of diphenylethylsilane in tetrahydrofuran (containing 0.2 g/ml of water) was prepared, and the solution was introduced into the supported gold nanoparticles obtained in the step (4) at a flow rate of 1 ml/min. The product in the effluent was detected as diphenylethylsilanol by 1H NMR, with a conversion of 100%. The supported gold nanoparticles continuously catalyzed for 50 hours, and the conversion still remained at 100%.

### Example 2

(1) Synthesis of topological polyolefin-based emulsifier with a terminal hydroxy group
   [(ArN=C(Me)-(Me)C=NAr)Pd(CH₃)(N≡CMe)]⁺SbF₆⁻(Ar=2,6-(iPr)₂C₆H₃) (80 mg, 0.1 mmol) and ethyl 2-(trimethylsiloxy)acrylate (1.504 g, 0.008 mol, Alfa Aesar) were dissolved in 10 ml of anhydrous dichloromethane under nitrogen protection; the resulting solution was poured into a Schlenck flask filled with butylene, the flask was placed in a water bath at 25°C, the absolute pressure of the system was maintained at 1 atm, and the reaction was carried out for 20 hours; upon the completion of the reaction, 100 ml of methanol was added to terminate the reaction, and the polymer was precipitated, dried in a vacuum oven at 50°C to obtain a topological polyolefin-based emulsifier with a terminal hydroxy group (¹H NMR and GPC results showed that the number average molecular weight was 120000, the molecular weight distribution was 2.25, the degree of branching was 96/1000 C, and each polyolefin molecule contained 74 hydroxy groups).
(2) Preparation of high internal phase emulsions
   0.2 g of the polyolefin-based emulsifier synthesized in the step (1), 0.7 ml of methyl acrylate (Sinopharm), and 0.3 ml of divinylbenzene were added to a 10 ml bacteria flask, and the polyolefin-based emulsifier was dispersed to obtain an oil phase. Sodium chloride (11 mg, Sinopharm) and ammonium persulfate (54 mg, Sinopharm) were dissolved in 6 ml of distilled water, and then added to a 10 ml bacterial flask to obtain an aqueous phase. The aqueous phase obtained above was added dropwise to the oil phase obtained above with 14000 rpm shear rate to obtain a stable water-in-oil high internal phase emulsion.
(3) Preparation of porous polymer materials
   The stable water-in-oil high internal phase emulsion obtained in the step (2) was filled into a steel tube, heated to 60°C in an oil bath, and reacted for 10 hours; upon the completion of the reaction, the resultant was dried in a vacuum oven at 70°C to remove water so as to obtain a porous polymer material filled in a steel tube. The resulting porous polymer material had a compression Young's modulus of 50 MPa, a porosity of 86%, a density of 0.15 g/cm³, and an average pore diameter of 0.59 µm.
(4) Use of the porous polymer materials in separation of sediment in river water
   Natural sediment-bearing river water was taken, and the transmittance of light at 500 nm was 10% determined by an ultraviolet spectrophotometer. The river water was introduced into the steel tube filled with a porous polymer material obtained in the step (3) at a flow rate of 5 ml/min. The resulting effluent was clear and transparent, and the transmittance of light at 500 nm was 99%.

### Example 3

(1) Synthesis of topological polyolefin-based emulsifier with a terminal amino group
   [(ArN=C(Me)-(Me)C=NAr)Pd(CH₃)(CH₂)₃C(O)OCH₃]⁺SbF₆⁻(Ar=2,6-(iPr)₂C₆H₃) (8 mg, 0.1 mmol) and N,N-dimethylacrylamide (0.099 g, 0.001 mol, Sinopharm) were dissolved in 10 ml of anhydrous dichloromethane under nitrogen protection; the resulting solution was poured into a Schlenck flask filled with propylene (Sinopec), the flask was placed in a water bath at 40°C, the absolute pressure of the system was maintained at 0.1 atm, and the reaction was carried out for 30 hours; upon the completion of the reaction, 30 ml of methanol was added to terminate the reaction, and the polymer was precipitated, dried in a vacuum oven at 20°C to obtain a topological polyolefin-based emulsifier with a terminal tertiary amino group (¹H NMR and GPC results showed that the number average molecular weight was 970000, the molecular weight distribution was 4.9, the degree of branching was 131/1000 C, and each polyolefin molecule contained 69 tertiary amino groups).
(2) Preparation of high internal phase emulsions
   0.005 g of the polyolefin-based emulsifier synthesized in the step (1), 0.8 ml of n-butyl acrylate (Sinopharm), and 0.2 ml of ethylene glycol dimethacrylate (Sigma-aldrich) were added to a 10 ml bacteria flask, and the polyolefin-based emulsifier was dispersed to obtain an oil phase. Potassium chloride (3 mg, Sinopharm) and 2,2'-azobis(2-methylpropionamidine) dihydrochloride (20 mg, Sinopharm) were dissolved in 5 ml of distilled water, and then added to a 10 ml bacterial flask to obtain an aqueous phase. The aqueous phase obtained above was added dropwise to the oil phase obtained above with 12000 rpm shear rate to obtain a stable water-in-oil high internal phase emulsion.
(3) Preparation of porous polymer materials
   The stable water-in-oil high internal phase emulsion obtained in the step (2) was subjected to initiated polymerization under 254 nm ultraviolet lamp at 25°C for 5 hours; upon the completion of the reaction, the resultant was dried in a vacuum oven at 60°C to remove water so as to obtain a porous polymer material. The resulting porous polymer material had a compression Young's modulus of 110 MPa, a porosity of 81%, a density of 0.19 g/cm³, and an average pore diameter of 2 µm.
(4) Use of the porous polymer materials in thermal insulation
   The thermal conductivity of the porous polymer material prepared in the step (3) was measured to be 0.040-0.048 W/(Km).

### Example 4

(1) Synthesis of topological polyolefins with a terminal hydroxy group [(ArN=C(Me)-(Me)C=NAr)Pd(CH₃)( (CH₂)₃C(O)OCH₃]⁺SbF₆-(Ar=2,6-(iPr)₂C₆H₃) (160 mg, 0.2 mmol) and ethyl 2-(trimethylsiloxy)acrylate (1.128 g, 0.006 mol, Alfa Aesar) were dissolved in 10 ml of anhydrous dichloromethane under nitrogen protection; the resulting solution was poured into a Schlenck flask filled with ethylene, the flask was placed in a water bath at 70°C, the absolute pressure of the system was maintained at 1 atm, and the reaction was carried out for 48 hours; upon the completion of the reaction, 200 ml of methanol was added to terminate the reaction, and the polymer was precipitated, dried in a vacuum oven at 30°C to obtain a polyolefin-based substance with a terminal hydroxy group (¹H NMR and GPC results showed that the number average molecular weight was 700000, the molecular weight distribution was 3.85, the degree of branching was 98/1000 C, and each polyolefin molecule contained 54 hydroxy groups).
(2) Post-sulfonation reaction
   2 g of the polyolefin-based substance obtained in the step (1) was dissolved in 100 ml of anhydrous tetrahydrofuran (Sinopharm), added with 0.05 g of sodium hydride (Sinopharm), and reacted at 70°C for 12 hours; then 0.2 g of propane sultone was added (Sinopharm), and reacted at 70°C for 12 hours; upon the completion of the reaction, 700 ml of methanol was added to precipitate a polyolefin-based emulsifier with sodium sulfonate at terminal, the precipitate was dried in a vacuum oven at 30°C to obtain a polyolefin-based emulsifier.
(3) Preparation of high internal phase emulsions
   0.008 g of the polyolefin-based emulsifier obtained in the step (2), 0.75 ml of isobutyl acrylate, and 0.25 ml of divinylbenzene were added to a 10 ml bacteria flask, and the polyolefin-based emulsifier was dispersed to obtain an oil phase. Sodium sulfate (14 mg) and 2,2'-azobis[2-(2-imidazolin-2-yl)propane](70 mg) were dissolved in 7 ml of distilled water, and then added to a 10 ml bacterial flask to obtain an aqueous phase. The aqueous phase obtained above was added dropwise to the oil phase obtained above with 15000 rpm shear rate to obtain a stable water-in-oil high internal phase emulsion.
(4) Preparation of porous polymer materials
   The stable water-in-oil high internal phase emulsion obtained in the step (3) was subjected to initiated polymerization under 365 nm ultraviolet lamp at 30°C for 3 hours; upon the completion of the reaction, the resultant was dried in a vacuum oven at 70°C to remove water so as to obtain a porous polymer material. The resulting porous polymer material had a compression Young's modulus of 32 MPa, a porosity of 87%, a density of 0.13 g/cm³, and an average pore diameter of 25 µm.
(5) Use of the porous polymer materials in energy storage materials

The porous polymer material obtained in the step (4) was immersed in n-octadecane at 40°C, and placed in a vacuum oven (40°C) for 1 hour to fill the pores of the porous polymer material with n-octadecane so as to obtain an energy storage material containing 82% by weight of n-octadecane. The energy storage material has a phase transition temperature of 28°C, a thermal conductivity of 0.3 W/(Km), and an energy density of 130 kJ/ kg.

### Example 5

(1) Synthesis of topological polyolefins with a terminal hydroxy group [(ArN=C(Me)-(Me)C=NAr)Pd(CH₃)(N≡CMe)]⁺SbF₆⁻(Ar=2,6-(iPr)₂C₆H₃) (80 mg, 0.1 mmol) and glycidyl acrylate (1.504 g, 0.008 mol) were dissolved in 10 ml of anhydrous dichloromethane under nitrogen protection; the resulting solution was poured into a Schlenck flask filled with ethylene, the flask was placed in a water bath at 15°C, the absolute pressure of the system was maintained at 2 atm, and the reaction was carried out for 12 hours; upon the completion of the reaction, 100 ml of methanol was added to terminate the reaction, and the polymer was precipitated, dried in a vacuum oven at 25°C to obtain a polyolefin-based substance with a terminal hydroxy group (¹H NMR and GPC results showed that the number average molecular weight was 110000, the molecular weight distribution was 1.21, the degree of branching was 93/1000 C, and each polyolefin molecule contained 71 hydroxy groups).
(2) Post-sulfation reaction
   2 g of the polyolefin-based substance obtained in the step (1) was dissolved in 50 ml of anhydrous tetrahydrofuran, added with 0.2 g of chlorosulfonic acid (Sinopharm), and reacted at 50°C for 24 hours; upon the completion of the reaction, 500 ml of methanol was added to precipitate a polyolefin-based emulsifier with sulfuric acid at terminal, the precipitate was dried in a vacuum oven at 30°C to obtain a polyolefin-based emulsifier.
(3) Preparation of high internal phase emulsions
   0.01g of the polyolefin-based emulsifier obtained in the step (2), 2 mg of benzoyl peroxide (Sinopharm), 0.6 ml of methyl (meth)acrylate (Sinopharm), and 0.4 ml of 1,4-butanediol dimethacrylate (Alfa Aesar) were added to a 10 ml bacteria flask, and the polyolefin-based emulsifier was dispersed to obtain an oil phase. Sodium nitrate (2 mg, Sinopharm) was dissolved in 4 ml of distilled water, and then added to a 10 ml bacterial flask to obtain an aqueous phase. The aqueous phase obtained above was added dropwise to the oil phase obtained above with 3000 rpm shear rate to obtain a stable water-in-oil high internal phase emulsion.
(4) Preparation of porous polymer materials
   5 g of the high internal phase emulsion obtained in the step (3) was filled in a steel tube, heated to 70°C in an oil bath, and reacted for 5 hours; upon the completion of the reaction, the resultant was dried in a vacuum oven at 80°C to remove water so as to obtain a porous polymer material filled in a steel tube. The resulting porous polymer material had a compression Young's modulus of 130 MPa, a porosity of 78%, a density of 0.23 g/cm³, and an average pore diameter of 45 µm.
(5) Use of the porous polymer materials in separation of organic solvent/water mixtures

A mixture of dichloromethane and water in a volume ratio of 1:1 was prepared, and 5 g of the mixture was introduced into a steel tube filled with a porous polymer material in the step (4) at a flow rate of 0.1 ml/min. The water content in the effluent was 97% by weight determined by gas chromatography.

### Example 6

(1) Synthesis of topological polyolefins with a terminal tert-butyl protected carboxyl group
   [(ArN=C(Me)-(Me)C=NAr)Pd(CH₃)(N≡CMe)]⁺SbF₆⁻(Ar=2,6-(iPr)₂C₆H₃) (0.24 mg, 0.3 mmol) and tert-butyl undecenoate (1.92 g, 0.008 mol, Alfa Aesar) were dissolved in 10 ml of anhydrous dichloromethane under nitrogen protection; the resulting solution was poured into a Schlenck flask filled with ethylene, the flask was placed in a water bath at 20°C, the absolute pressure of the system was maintained at 1 atm, and the reaction was carried out for 20 hours; upon the completion of the reaction, 150 ml of methanol was added to terminate the reaction, and the polymer was precipitated, dried in a vacuum oven at 50°C to obtain a polyolefin-based substance with a terminal tert-butyl protected carboxyl group (¹H NMR and GPC results showed that the number average molecular weight was 150000, the molecular weight distribution was 1.17, the degree of branching was 98/1000 C, and each polyolefin molecule contained 67 tert-butyl protected carboxyl groups).
(2) Post-carboxyl deprotection reaction
   2 g of the polyolefin-based substance obtained in the step (1) was dissolved in 25 ml of dichloromethane, added with 10 ml of trifluoroacetic acid (Sinopharm), and reacted at 25°C for 24 hours; upon the completion of the reaction, 150 ml of methanol was added to precipitate a polyolefin-based emulsifier with carboxylic acid at terminal, the precipitate was dried in a vacuum oven at 30°C to obtain a polyolefin-based emulsifier.
(3) Preparation of high internal phase emulsions
   0.02 g of the polyolefin-based emulsifier obtained in the step (2), 4 mg of azobisisobutyronitrile (Sinopharm), 0.65 ml of tert-butyl (meth)acrylate and 0.35 ml of divinylbenzene were added to a 10 ml bacteria flask, and the polyolefin-based emulsifier was dispersed to obtain an oil phase. Potassium nitrate (4 mg, Sinopharm) was dissolved in 5 ml of distilled water, and then added to a 10 ml bacterial flask. The aqueous phase obtained above was added dropwise to the oil phase obtained above with 6000 rpm shear rate to obtain a stable water-in-oil high internal phase emulsion.
(4) Preparation of porous polymer materials
   The stable water-in-oil high internal phase emulsion obtained in the step (3) was heated to 80°C in an oil bath, and reacted for 3 hours; upon the completion of the reaction, the resultant was dried in a vacuum oven at 90°C to remove water so as to obtain a porous polymer material. The resulting porous polymer material had a compression Young's modulus of 102 MPa, a porosity of 79%, a density of 0.21 g/cm³, and an average pore diameter of 97 µm.
(5) Use of the porous polymer materials in separation of oil/water mixtures

50 ml of a mixture of gasoline/water in mass ratio of 1:50 was prepared, and 0.8 g of the porous polymer material obtained in the step (4) was added to the mixture, shaken for 5 min and taken out. The gasoline absorption rate was 99.0% determined by gas chromatography.

### Example 7

(1) Synthesis of topological polyolefins with a terminal bromoisobutyl group [(ArN=C(Me)-(Me)C=NAr)Pd(CH₃)( (CH₂)₃C(O)OCH₃)]⁺SbF₆⁻(Ar=2,6-(iPr)₂C₆H₃) (42 mg, 0.05 mmol) and ethyl 2-(2-bromoisobutoxy) acrylate (1.06 g, 0.004 mol) were dissolved in 10 ml of anhydrous dichloromethane under nitrogen protection; the resulting solution was poured into a Schlenck flask filled with ethylene, the flask was placed in a water bath at 25°C, the absolute pressure of the system was maintained at 1 atm, and the reaction was carried out for 30 hours; upon the completion of the reaction, 100 ml of methanol was added to terminate the reaction, and the polymer was precipitated, dried in a vacuum oven at 25°C to obtain a polyolefin-based substance with a terminal bromoisobutyl group (¹H NMR and GPC results showed that the number average molecular weight was 190000, the molecular weight distribution was 1.29, the degree of branching was 98/1000 C, and each polyolefin molecule contained 40 bromoisobutyl groups).
(2) Post-ATRP initiated polymerization reaction
   0.5 g of the polyolefin-based substance obtained in the step (1) was dissolved in 10 ml of anhydrous toluene, added with 0.5 g of hydroxyethyl acrylate (Sinopharm) and 16 mg of N,N,N',N',N"-pentamethyldiethylenetriamine (Sinopharm), and nitrogen was introduced to remove oxygen under magnetic stirring for 1 hour, and 11 mg of cuprous chloride (Sinopharm) was added, and subjected to initiated polymerization reaction at 70°C for 4 hours; upon the completion of the reaction, 100 ml of methanol was added to obtain a precipitate, and the precipitate was dried in a vacuum oven at 30°C to obtain a polyolefin-based emulsifier with hydroxyethyl polyacrylate at terminal.
(3) Preparation of high internal phase emulsions
   0.3 g of the polyolefin-based emulsifier obtained in the step (2), 8 mg of 2-hydroxy-methylphenylpropan-1-one (Sinopharm), 0.65 ml of acrylonitrile (Sinopharm), and 0.35 ml of divinylbenzene were added to a 10 ml bacteria flask, and the polyolefin-based emulsifier was dispersed to obtain an oil phase. Potassium sulfate (6 mg, Sinopharm) was dissolved in 6 ml of distilled water, and then added to a 10 ml bacterial flask to obtain an aqueous phase. The aqueous phase obtained above was added dropwise to the oil phase obtained above with 12000 rpm shear rate to obtain a stable water-in-oil high internal phase emulsion.
(4) Preparation of porous polymer materials
   The stable water-in-oil high internal phase emulsion obtained in the step (3) was subjected to initiated polymerization reaction under 365 nm ultraviolet lamp at 35°C for 1 hour; upon the completion of the reaction, the resultant was dried in a vacuum oven at 80°C to remove water so as to obtain a porous polymer material. The resulting porous polymer material had a compression Young's modulus of 67 MPa, a porosity of 84%, a density of 0.16 g/cm³, and an average pore diameter of 39 µm.
(5) Use of the porous polymer materials in separation of organic solvent/water mixtures

50 ml of a mixture of toluene/water in mass ratio of 1:50 was prepared, and 0.8 g of the porous polymer material obtained in the step (4) was added to the mixture, shaken for 5 min and taken out. The toluene absorption rate was 99.5% determined by gas chromatography.

### Example 8

(1) Synthesis of topological polyolefins with a terminal epoxy group
   [(ArN=C(Me)-(Me)C=NAr)Pd(CH₃)(N≡CMe)]⁺SbF₆⁻(Ar=2,6-(iPr)₂C₆H₃) (160 mg, 0.2 mmol) and glycidyl acrylate (0.456 g, 0.004 mol) were dissolved in 10 ml of anhydrous dichloromethane under nitrogen protection; the resulting solution was poured into a Schlenck flask filled with ethylene, the flask was placed in a water bath at 25°C, the absolute pressure of the system was maintained at 1 atm, and the reaction was carried out for 24 hours; upon the completion of the reaction, 200 ml of methanol was added to terminate the reaction, and the polymer was precipitated, dried in a vacuum oven at 25°C to obtain a polyolefin-based substance with a terminal epoxy group (¹H NMR and GPC results showed that the number average molecular weight was 160000, the molecular weight distribution was 1.25, the degree of branching was 97/1000 C, and each polyolefin molecule contained 29 epoxy groups).
(2) Post-reaction to synthesize a polyolefin-based emulsifier with boric acid at terminal
   2 g of the polyolefin-based substance obtained in the step (1) was dissolved in 50 ml of tetrahydrofuran, added with 0.02 g of 3-aminobenzeneboronic acid (Sinopharm), and reacted at 25°C for 24 hours; upon the completion of the reaction, 250 ml of methanol was added to obtain a precipitate, and the precipitate was dried in a vacuum oven at 25°C to obtain a polyolefin-based emulsifier with boric acid at terminal.
(3) Preparation of high internal phase emulsions
   0.05 g of the polyolefin-based emulsifier obtained in the step (2), 10 mg of 1-hydroxycyclohexyl phenyl ketone (Sinopharm), 0.55 ml of 2-ethylhexyl (meth)acrylate (Sinopharm), and 0.45 ml of 1,4-butanediol dimethacrylate (Alfa Aesar) were added to a 10 ml bacteria flask, and the polyolefin-based emulsifier was dispersed to obtain an oil phase. Ammonium sulfate (14 mg, Sinopharm) was dissolved in 7 ml of distilled water, and then added to a 10 ml bacterial flask to obtain an aqueous phase. The aqueous phase obtained above was added dropwise to the oil phase obtained above with 15000 rpm shear rate to obtain a stable water-in-oil high internal phase emulsion.
(4) Preparation of porous polymer materials
   The stable water-in-oil high internal phase emulsion obtained in the step (3) was subjected to initiated polymerization reaction under 365 nm ultraviolet lamp at 40°C for 0.1 hour; upon the completion of the reaction, the resultant was dried in a vacuum oven at 90°C to remove water so as to obtain a porous polymer material. The resulting porous polymer material had a compression Young's modulus of 32 MPa, a porosity of 88%, a density of 0.13 g/cm³, and an average pore diameter of 2.3 µm.
(5) Use of the porous polymer materials in selective separation of ions having different particle size

The porous polymer material prepared in the step (4) was fixed in a 10 ml syringe tube with an epoxy resin, and an aqueous suspension containing polystyrene microspheres having an average particle diameter of 500 nm and 10 µm was prepared, and the suspension was allowed to pass through the syringe. The effluent was determined by dynamic light scattering meter (DLS), and it contained only 500 nm microspheres without 10 µm microspheres.

### Example 9

(1) Synthesis of topological polyolefins with a terminal epoxy group
   [(ArN=C(Me)-(Me)C=NAr)Pd(CH₃)(N≡CMe)]⁺SbF₆⁻(Ar=2,6-(iPr)₂C₆H₃) (120 mg, 0.15 mmol) and glycidyl acrylate (4.56 g, 0.04 mol) were dissolved in 10 ml of anhydrous dichloromethane under nitrogen protection; the resulting solution was poured into a Schlenck flask filled with ethylene, the flask was placed in a water bath at 25°C, the absolute pressure of the system was maintained at 2 atm, and the reaction was carried out for 24 hours; upon the completion of the reaction, 200 ml of methanol was added to terminate the reaction, and the polymer was precipitated, dried in a vacuum oven at 25°C to obtain a polyolefin-based emulsifier with a terminal epoxy group (¹H NMR and GPC results showed that the number average molecular weight was 210000, the molecular weight distribution was 1.30, the degree of branching was 96/1000 C, and each polyolefin molecule contained 41 epoxy groups).
(2) Preparation of high internal phase emulsions
   0.05 g of the polyolefin-based emulsifier obtained in the step (1), 0.05 g of Span-80, 10 mg of 1-hydroxycyclohexyl phenyl ketone (Sinopharm), 0.55 ml of styrene (Sinopharm), and 0.45 ml of 1,4-butanediol dimethacrylate (Alfa Aesar) were added to a 10 ml bacteria flask, and the emulsifier was dispersed to obtain an oil phase. Ammonium sulfate (27 mg, Sinopharm) was dissolved in 12 ml of distilled water, and then added to a 10 ml bacterial flask to obtain an aqueous phase. The aqueous phase obtained above was added dropwise to the oil phase obtained above with 300 rpm shear rate to obtain a stable water-in-oil high internal phase emulsion.
(3) Preparation of porous polymer materials
   The stable water-in-oil high internal phase emulsion obtained in the step (2) was subjected to initiated polymerization reaction under 365 nm ultraviolet lamp at 20°C for 0.5 hours; upon the completion of the reaction, the resultant was dried in a vacuum oven at 90°C to remove water so as to obtain a porous polymer material. The resulting porous polymer material had a compression Young's modulus of 6 MPa, a porosity of 92.5%, a density of 0.074 g/cm³, and an average pore diameter of 156 µm.
(4) Use of the porous polymer materials in separation of organic solvent/water mixtures

50 ml of a mixture of ethyl acetate/water in mass ratio of 1:50 was prepared, and 0.8 g of the porous polymer material obtained in the step (3) was added to the mixture, shaken for 5 min and taken out. The ethyl acetate absorption rate was 98.5% determined by gas chromatography.

### Example 10

(1) Synthesis of topological polyolefin-based emulsifier with a terminal hydroxy group
   [(ArN=C(Me)-(Me)C=NAr)Pd(CH₃)(N≡CMe)]⁺SbF₆⁻(Ar=2,6-(iPr)₂C₆H₃) (100 mg, 0.125 mmol) and ethyl 2-(trimethylsiloxy)acrylate (3.76 g, 0.02 mol, Alfa Aesar) were dissolved in 10 ml of anhydrous dichloromethane under nitrogen protection; the resulting solution was poured into a Schlenck flask filled with ethylene, the flask was placed in a water bath at 25°C, the absolute pressure of the system was maintained at 3 atm, and the reaction was carried out for 24 hours; upon the completion of the reaction, 100 ml of methanol was added to terminate the reaction, and the polymer was precipitated, dried in a vacuum oven at 80°C to obtain a polyolefin-based substance with a terminal hydroxy group (¹H NMR and GPC results showed that the number average molecular weight was 190000, the molecular weight distribution was 1.30, the degree of branching was 98/1000 C, and each polyolefin molecule contained 84 hydroxy groups).
(2) Preparation of high internal phase emulsions
   0.1 g of the polyolefin-based emulsifier obtained in the step (1), 0.05 g of surface hydrophobically modified silica nanoparticles, 0.7 MPa of styrene (Sinopharm), and 0.3 ml of divinylbenzene were added to a 10 ml bacteria flask, and the polyolefin-based emulsifier was dispersed to obtain an oil phase. Sodium chloride (11 mg, Sinopharm) and potassium persulfate (155 mg, Sinopharm) were dissolved in 8 ml of distilled water, and then added to a 10 ml bacterial flask to obtain an aqueous phase. The aqueous phase obtained above was added dropwise to the oil phase obtained above with 2000 rpm shear rate to obtain a stable water-in-oil high internal phase emulsion.
(3) Preparation of porous polymer materials
   The stable water-in-oil high internal phase emulsion obtained in the step (2) was heated to 75°C in an oil bath, and reacted for 8 hours; upon the completion of the reaction, the resultant was dried in a vacuum oven at 50°C to remove water so as to obtain a porous polymer material. The resulting porous polymer material had a compression Young's modulus of 23 MPa, a porosity of 88%, a density of 0.11 g/cm³, and an average pore diameter of 130 µm.
(4) Use of the porous polymer materials in separation of organic solvent/water mixtures

50 ml of a mixture of benzene/water in mass ratio of 1:50 was prepared, and 0.8 g of the porous polymer material obtained in the step (3) was added to the mixture, shaken for 5 min and taken out. The benzene absorption rate was 99.5% determined by gas chromatography.

## Claims

1. Use of a topological polyolefin-based copolymer as an emulsifier in the preparation of a stable water-in-oil high internal phase emulsion, wherein the copolymer is obtained by copolymerizing one or more C₂-C₁₂ olefins and one or more functional monomers optionally in the presence of a catalyst, and optionally subjecting to a post-reaction, wherein the copolymer has a number average molecular weight of 300-1,000,000 g/mol, and a molecular weight distribution of 1-20; the functional monomers are selected from the group consisting of (meth)acrylates and derivatives thereof, (meth)acrylamides and derivatives thereof, and undecenoates and derivatives thereof; and the ratio of the olefins and the functional monomers is 10-5000:1.

2. The use according to claim 1, wherein the olefin is selected from the group consisting of ethylene, propylene, 1-butene, 1-pentene, 1-hexene, 1-octene, 1-dodecene, 4-methyl-1-pentene or any mixtures thereof.

3. The use according to claim 1 or 2, wherein the functional monomers are selected from the group consisting of methyl acrylate, ethyl acrylate, n-butyl acrylate, isobutyl acrylate, tert-butyl acrylate, glycidyl acrylate, ethyl 2-methoxyacrylate, ethyl 2-benzyloxyacrylate, ethyl 2-(trimethylsiloxy)acrylate, ethyl 4-(trimethylsiloxy)acrylate, ethyl 2-(triethylsiloxy)acrylate, ethyl 2-(tert-butyldimethylsiloxy)acrylate, ethyl 2-(tert-butyldiphenylsiloxy)acrylate, ethyl 2-(dimethylamino) acrylate, ethyl 2-(ethylamino)acrylate, ethyl 2-(2-bromoisobutoxy)acrylate, 2-(acryloyloxyethoxy)trimethylsilane, acryloyloxyethyltrimethylammonium chloride, N,N-dimethylacrylamide, isopropylacrylamide, N,N-dipropylacrylamide, ethyl 2-(trimethylsiloxy) undecenoate, methyl undecenoate, tert-butyl undecenoate, and any mixtures thereof.

4. The use according to claim 3, wherein the functional monomers are selected from the group consisting of glycidyl acrylate, ethyl 2-(trimethylsiloxy)acrylate, ethyl 4-(trimethylsiloxy)acrylate, ethyl 2-(triethylsiloxy)acrylate, ethyl 2-(tert-butyldimethylsiloxy)acrylate, ethyl 2-(2-bromoisobutoxy)acrylate, tert-butyl undecenoate, N,N-dimethylacrylamide, and any mixtures thereof.

5. The use according to any one of claims 1-2, wherein the post-reaction is selected from the group consisting of hydroxy deprotection reaction, amino deprotection reaction, carboxyl deprotection reaction, epoxide ring-opening reaction, esterification reaction, reversible addition-fragmentation chain transfer polymerization reaction, atom transfer radical polymerization reaction, and nitroxide-mediated radical polymerization.

6. The use according to any one of claims 1-2, wherein the polyolefin-based copolymer is a nonionic polyolefin-based copolymer or an ionic polyolefin-based copolymer.

7. A stable water-in-oil high internal phase emulsion comprising the polyolefin-based copolymer as emulsifier described in any one of claims 1-6.

8. The high internal phase emulsion according to claim 7, comprising an aqueous phase having a volume fraction of at least 67%; an oil phase having a volume fraction of at most 33%; and the polyolefin-based copolymer as emulsifier in an amount of 0.0001-0.2 g/ml, based on the total volume of the aqueous phase and the oil phase.

9. The high internal phase emulsion according to claim 7 or 8, wherein the material constituting the oil phase is selected from vinyl monomers.

10. A process for preparing a stable water-in-oil high internal phase emulsion according to any one of claims 7-9, comprising the steps of:
(1) preparation of an oil phase: mixing the polyolefin-based copolymer as emulsifier described in any one of claims 1-6 and an optional known emulsifier in any ratio and dispersing into an oil phase, wherein the total concentration of the polyolefin-based emulsifier and optional known emulsifier is 0.0001-1 g/ml;
(2) preparation of an aqueous phase: dissolving a salt and a water-soluble initiator in water, wherein the concentration of salt is 0-0.1 g/ml; and the concentration of initiator is 0.0001-0.05 g/ml; and
(3) preparation of a stable water-in-oil high internal phase emulsion: adding the aqueous phase prepared in the step (2) to the oil phase prepared in the step (1) with stirring of 100-20000 rpm to obtain a stable water-in-oil high internal phase emulsion, wherein the volume ratio of the oil phase to the aqueous phase is 1:1-15.

11. The process according to claim 10, wherein the water-soluble initiator is selected from the group consisting of a water-soluble thermal initiator and a water-soluble photo-initiator.

12. A process for preparing a stable water-in-oil high internal phase emulsion according to any one of claims 7-9, comprising the steps of:
(1) preparation of an oil phase: dispersing the polyolefin-based copolymer as emulsifier described in any one of claims 1-6, a known emulsifier and an oil-soluble initiator mixed in any ratio into an oil phase, wherein the total concentration of the polyolefin-based emulsifier and known emulsifier is 0.0001-1 g/ml, and the concentration of the oil-soluble initiator is 0.0001-0.05 g/ml;
(2) preparation of an aqueous phase: dissolving a salt in water, wherein the concentration of salt is 0-0.1 g/ml; and
(3) preparation of a stable water-in-oil high internal phase emulsion: adding the aqueous phase prepared in the step (2) to the oil phase prepared in the step (1) with stirring of 100-20000 rpm to obtain a stable water-in-oil high internal phase emulsion, wherein the volume ratio of the oil phase to the aqueous phase is 1:1-15.

13. The process according to claim 12, wherein the oil-soluble initiator includes an oil-soluble thermal initiator and an oil-soluble photo-initiator.

14. A porous polymer material obtained by polymerization of a stable water-in-oil high internal phase emulsion according to any one of claims 7-9 or prepared by the process according to any one of claims 10-13.

## Patentansprüche

1. Verwendung eines topologischen Copolymers auf Polyolefin-Basis als ein Emulgator bei der Herstellung einer stabilen Wasser-in-Öl-Emulsion mit hoher interner Phase, wobei das Copolymer durch Copolymerisieren von einem oder mehreren C₂-C₁₂-Olefinen und einem oder mehreren funktionellen Monomeren wahlweise bei Vorhandensein eines Katalysators und wahlweise Aussetzen gegenüber einer Nachreaktion erhalten wird, wobei das Copolymer ein zahlenmittleres Molekulargewicht von 300 bis 1 000 000 g/mol und eine Molekulargewichtsverteilung von 1 bis 20 aufweist; wobei die funktionellen Monomere ausgewählt sind aus der Gruppe, die aus (Meth)Acrylaten und Derivaten davon, (Meth)Acrylamiden und Derivaten davon und Undecenoaten und Derivaten davon besteht; und das Verhältnis der Olefine und der funktionellen Monomere 10 bis 5000 : 1 beträgt.

2. Verwendung nach Anspruch 1, wobei das Olefin ausgewählt ist aus der Gruppe, die besteht aus Ethylen, Propylen, 1-Buten, 1-Penten, 1-Hexen, 1-Octen, 1-Dodecen, 4-Methyl-1-Penten oder beliebigen Gemischen davon.

3. Verwendung nach Anspruch 1 oder 2, wobei die funktionellen Monomere ausgewählt sind aus der Gruppe, die besteht aus Methylacrylat, Ethylacrylat, n-Butylacrylat, Isobutylacrylat, tert-Butylacrylat, Glycidylacrylat, Ethyl-2-Methoxyacrylat, Ethyl-2-Benzyloxyacrylat, Ethyl-2-(trimethylsiloxy)acrylat, Ethyl-4-(trimethylsiloxy)acrylat, Ethyl-2-(triethylsiloxy)acrylat, Ethyl-2-(tert-butyldimethylsiloxy)acrylat, Ethyl-2-(tert-butyldiphenylsiloxy)acrylat, Ethyl-2-(dimethylamino)acrylat, Ethyl-2-(ethylamino)acrylat, Ethyl-2-(2-bromoisobutoxy)acrylat, 2-(Acryloyloxyethoxy)trimethylsilan, Acryloyloxyethyltrimethylammoniumchlorid, N-N-Dimethylacrylamid, Isopropylacrylamid, N,N-Dipropylacrylamid, Ethyl-2-(trimetyhlsiloxy)undecenoat, Methylundecenoat, tert-Butylundecenoat und beliebigen Gemischen davon.

4. Verwendung nach Anspruch 3, wobei die funktionellen Monomere ausgewählt sind aus der Gruppe, die besteht aus Glyciylacrylat, Ethyl-2-(trimethylsiloxy)acrylat, Ethyl-4-(trimethylsiloxy)acrylat, Ethyl-2-(triethylsiloxy)acrylat, Ethyl-2-(tert-butyldimethylsiloxy)acrylat, Ethyl-2-(2-bromoisobutoxy)acrylat, tert-Butylundecenoat, N,N-Dimethylacrylamid und beliebigen Gemischen davon.

5. Verwendung nach einem der Ansprüche 1 bis 2, wobei die Nachreaktion ausgewählt ist aus der Gruppe, die besteht aus Hydroxy-Entschützungsreaktion, Amino-Entschützungsreaktion, Carboxyl-Entschützungsreaktion, Epoxid-Ringöffnungsreaktion, Veresterungsreaktion, reversibler Additions-Fragmentierungs-Kettenübertragungs-Polymerisationsreaktion, radikalischer Atomtransferpolymerisationsreaktion und radikalischer Nitroxidvermittelter Polymerisation.

6. Verwendung nach einem der Ansprüche 1 bis 2, wobei das Copolymer auf Polyolefin-Basis ein nichtionisches Copolymer auf Polyolefin-Basis oder ein ionisches Copolymer auf Polyolefin-Basis ist.

7. Stabile Wasser-in-Öl-Emulsion mit hoher interner Phase, die das Copolymer auf Polyolefin-Basis als in einem der Ansprüche 1 bis 6 beschriebener Emulgator umfasst.

8. Emulsion mit hoher interner Phase nach Anspruch 7, umfassend eine wässrige Phase, die einen Volumenanteil von mindestens 67% aufweist; eine Ölphase, die einen Volumenanteil von höchstens 33% aufweist; und das Copolymer auf Polyolefin-Basis als Emulgator in einer Menge von 0,0001 bis 0,2 g/ml, bezogen auf das Gesamtvolumen der wässrigen Phase und der Ölphase.

9. Emulsion mit hoher interner Phase nach Anspruch 7 oder 8, wobei das Material, das die Ölphase bildet, aus Vinylmonomeren ausgewählt ist.

10. Verfahren zur Herstellung einer stabilen Wasser-in-Öl-Emulsion mit hoher interner Phase nach einem der Ansprüche 7 bis 9, das die folgenden Schritte umfasst:
(1) Herstellung einer Ölphase: Mischen des Copolymers auf Polyolefin-Basis als in einem der Ansprüche 1 bis 6 beschriebener Emulgator und eines wahlfreien bekannten Emulgators in einem beliebigen Verhältnis und Dispergieren in eine Ölphase, wobei die Gesamtkonzentration an Emulgator auf Polyolefin-Basis und wahlweise bekanntem Emulgator 0,0001 bis 1 g/ml beträgt;
(2) Herstellung einer wässrigen Phase: Lösen eines Salzes und eines wasserlöslichen Initiators in Wasser, wobei die Konzentration an Salz 0 bis 0,1 g/ml beträgt; und die Konzentration an Initiator 0,0001 bis 0,05 g/ml beträgt; und
(3) Herstellung einer stabilen Wasser-in-Öl-Emulsion mit hoher interner Phase: Beimengen der in Schritt (2) hergestellten wässrigen Phase zu der in Schritt (1) hergestellten Ölphase bei Rühren mit 100 bis 20000 U/min, um eine stabile Wasser-in-Öl-Emulsion mit hoher interner Phase zu erhalten, wobei das Volumenverhältnis der Ölphase zur wässrigen Phase 1 : 1 bis 15 beträgt.

11. Verfahren nach Anspruch 10, wobei der wasserlösliche Initiator ausgewählt ist aus der Gruppe, die besteht aus einem wasserlöslichen thermischen Initiator und einem wasserlöslichen Photoinitiator.

12. Verfahren zur Herstellung einer stabilen Wasser-in-Öl-Emulsion mit hoher interner Phase nach einem der Ansprüche 7 bis 9, das die folgenden Schritte umfasst:
(1) Herstellung einer Ölphase: Dispergieren des Copolymers auf Polyolefin-Basis als in einem der Ansprüche 1 bis 6 beschriebener Emulgator, eines bekannten Emulgators und eines öllöslichen Initiators, die in einem beliebigen Verhältnis gemischt sind, in eine Ölphase, wobei die Gesamtkonzentration des Emulgators auf Polyolefin-Basis und bekannten Emulgators 0,0001 bis 1 g/ml beträgt und die Konzentration des öllöslichen Initiators 0,0001 bis 0,05 g/ml beträgt;
(2) Herstellung einer wässrigen Phase: Lösen eines Salzes in Wasser, wobei die Konzentration an Salz 0 bis 0,1 g/ml beträgt; und
(3) Herstellung einer stabilen Wasser-in-Öl-Emulsion mit hoher interner Phase: Beimengen der in Schritt (2) hergestellten wässrigen Phase zu der in Schritt (1) hergestellten Ölphase bei Rühren mit 100 bis 20000 U/min, um eine stabile Wasser-in-Öl-Emulsion mit hoher interner Phase zu erhalten, wobei das Volumenverhältnis der Ölphase zur wässrigen Phase 1 : 1 bis 15 beträgt.

13. Verfahren nach Anspruch 12, wobei der öllösliche Initiator einen öllöslichen thermischen Initiator und einen öllöslichen Photoinitiator umfasst.

14. Poröses Polymermaterial, das durch Polymerisation einer stabilen Wasser-in-Öl-Emulsion mit hoher interner Phase nach einem der Ansprüche 7 bis 9 erhalten wurde oder durch das Verfahren nach einem der Ansprüche 10 bis 13 hergestellt wurde.

## Revendications

1. Utilisation d'un copolymère à base de polyoléfine topologique en tant qu'émulsionnant dans la préparation d'une émulsion eau dans l'huile stable à phase interne hautement majoritaire, dans laquelle le copolymère est obtenu par copolymérisation d'une ou plusieurs oléfines en C₂ à C₁₂ et d'un ou plusieurs monomères fonctionnels éventuellement en présence d'un catalyseur, et éventuellement soumission à une post-réaction, dans laquelle le copolymère a une masse moléculaire moyenne en nombre de 300 à 1 000 000 g/mol, et une distribution des masses moléculaires de 1 à 20 ; les monomères fonctionnels sont choisis dans le groupe constitué par les (méth)acrylates et leurs dérivés, les (méth)acrylamides et leurs dérivés, et les undécénoates et leurs dérivés ; et le rapport des oléfines aux monomères fonctionnels est de 10 à 5 000/1.

2. Utilisation selon la revendication 1, dans laquelle l'oléfine est choisie dans le groupe constitué par l'éthylène, le propylène, le 1-butène, le 1-pentène, le 1-hexène, le 1-octène, le 1-dodécène, le 4-méthyl-1-pentène, et n'importe lesquels de leurs mélanges.

3. Utilisation selon la revendication 1 ou 2, dans laquelle les monomères fonctionnels sont choisis dans le groupe constitué par l'acrylate de méthyle, l'acrylate d'éthyle, l'acrylate de n-butyle, l'acrylate d'isobutyle, l'acrylate de tert-butyle, l'acrylate de glycidyle, le 2-méthoxyacrylate d'éthyle, le 2-benzyloxyacrylate d'éthyle, le 2-(triméthylsiloxy)acrylate d'éthyle, le 4-(triméthylsiloxy)acrylate d'éthyle, le 2-(triéthylsiloxy)acrylate d'éthyle, le 2-(tert-butyldiméthylsiloxy)acrylate d'éthyle, le 2-(tert-butyldiphénylsiloxy)acrylate d'éthyle, le 2-(diméthylamino)acrylate d'éthyle, le 2-(éthylamino)acrylate d'éthyle, le 2-(2-bromoisobutoxy)acrylate d'éthyle, le 2-(acryloyloxyéthoxy)triméthylsilane, le chlorure d'acryloyloxyéthyltriméthylammonium, le N,N-diméthylacrylamide, l'isopropylacrylamide, le N,N-dipropylacrylamide, le 2-(triméthylsiloxy)undécénoate d'éthyle, l'undécénoate de méthyle, l'undécénoate de tert-butyle, et n'importe lesquels de leurs mélanges.

4. Utilisation selon la revendication 3, dans laquelle les monomères fonctionnels sont choisis dans le groupe constitué par l'acrylate de glycidyle, le 2-(triméthylsiloxy)acrylate d'éthyle, le 4-(triméthylsiloxy)acrylate d'éthyle, le 2-(triéthylsiloxy)acrylate d'éthyle, le 2-(tert-butyldiméthylsiloxy)acrylate d'éthyle, le 2-(2-bromoisobutoxy)acrylate d'éthyle, l'undécénoate de tert-butyle, le N,N-diméthylacrylamide, et n'importe lesquels de leurs mélanges.

5. Utilisation selon l'une quelconque des revendications 1 et 2, dans laquelle la post-réaction est choisie dans le groupe constitué par une réaction de déprotection d'hydroxy, une réaction de déprotection d'amino, une réaction de déprotection de carboxyle, une réaction de décyclisation d'époxyde, une réaction d'estérification, une réaction de polymérisation par transfert de chaîne réversible par addition-fragmentation, une réaction de polymérisation radicalaire par transfert atomique, et une polymérisation radicalaire médiée par un nitroxyde.

6. Utilisation selon l'une quelconque des revendications 1 et 2, dans laquelle le copolymère à base de polyoléfine est un copolymère à base de polyoléfine non-ionique ou un copolymère à base de polyoléfine ionique.

7. Émulsion eau dans l'huile stable à phase interne hautement majoritaire comprenant le copolymère à base de polyoléfine en tant qu'émulsionnant décrit dans l'une quelconque des revendications 1 à 6.

8. Émulsion à phase interne hautement majoritaire selon la revendication 7, comprenant une phase aqueuse ayant une fraction volumique d'au moins 67 % ; une phase huileuse ayant une fraction volumique d'au plus 33 % ; et le copolymère à base de polyoléfine en tant qu'émulsionnant en une quantité de 0,0001 à 0,2 g/ml, par rapport au volume total de la phase aqueuse et de la phase huileuse.

9. Émulsion à phase interne hautement majoritaire selon la revendication 7 ou 8, dans laquelle le matériau constituant la phase huileuse est choisi parmi les monomères de vinyle.

10. Procédé pour préparer une émulsion eau dans l'huile stable à phase interne hautement majoritaire selon l'une quelconque des revendications 7 à 9, comprenant les étapes de :
(1) préparation d'une phase huileuse : mélange du copolymère à base de polyoléfine en tant qu'émulsionnant décrit dans l'une quelconque des revendications 1 à 6 et d'un émulsionnant connu optionnel en un rapport quelconque et dispersion dans une phase huileuse, la concentration totale de l'émulsionnant à base de polyoléfine et de l'émulsionnant connu optionnel étant de 0,0001 à 1 g/ml ;
(2) préparation d'une phase aqueuse : dissolution dans de l'eau d'un sel et d'un amorceur soluble dans l'eau, la concentration de sel étant de 0 à 0,1 g/ml ; et la concentration d'amorceur étant de 0,0001 à 0,05 g/ml ; et
(3) préparation d'une émulsion eau dans l'huile stable à phase interne hautement majoritaire : addition de la phase aqueuse préparée dans l'étape (2) à la phase huileuse préparée dans l'étape (1) sous agitation à 100 à 20 000 t/min pour que soit obtenue une émulsion eau dans l'huile stable à phase interne hautement majoritaire, le rapport en volume de la phase huileuse à la phase aqueuse étant de 1/1 à 15.

11. Procédé selon la revendication 10, dans lequel l'amorceur soluble dans l'eau est choisi dans le groupe constitué par un amorceur thermique soluble dans l'eau et un photoamorceur soluble dans l'eau.

12. Procédé pour préparer une émulsion eau dans l'huile stable à phase interne hautement majoritaire selon l'une quelconque des revendications 7 à 9, comprenant les étapes de :
(1) préparation d'une phase huileuse : dispersion du copolymère à base de polyoléfine en tant qu'émulsionnant décrit dans l'une quelconque des revendications 1 à 6, d'un émulsionnant connu et d'un amorceur soluble dans l'huile mélangés en n'importe quel rapport dans une phase huileuse, la concentration totale de l'émulsionnant à base de polyoléfine et de l'émulsionnant connu étant de 0,0001 à 1 g/ml, et la concentration de l'amorceur soluble dans l'huile étant de 0,0001 à 0,05 g/ml ;
(2) préparation d'une phase aqueuse : dissolution dans de l'eau d'un sel la concentration de sel étant de 0 à 0,1 g/ml ; et
(3) préparation d'une émulsion eau dans l'huile stable à phase interne hautement majoritaire : addition de la phase aqueuse préparée dans l'étape (2) à la phase huileuse préparée dans l'étape (1) sous agitation à 100 à 20 000 t/min pour que soit obtenue une émulsion eau dans l'huile stable à phase interne hautement majoritaire, le rapport en volume de la phase huileuse à la phase aqueuse étant de 1/1 à 15.

13. Procédé selon la revendication 12, dans lequel l'amorceur soluble dans l'huile inclut un amorceur thermique soluble dans l'huile et un photoamorceur soluble dans l'huile.

14. Matériau polymère poreux obtenu par polymérisation d'une émulsion eau dans l'huile stable à phase interne hautement majoritaire selon l'une quelconque des revendications 7 à 9 ou préparée par le procédé selon l'une quelconque des revendications 10 à 13.
